# EUROPEAN PATENT APPLICATION

(11) **EP 2 747 181 A1**
(43) Date of publication of application: **25.06.2014**
(21) Application number: 12382524.2
(22) Date of filing: 21.12.2012
(51) Int. Cl.: H01M 8/06

(54) **Process for the methanogenesis inhibition in single chamber microbial electrolysis cells**

(71) Applicant: Sociedad española de carburos metalicos, S.A., 08009 Barcelona (ES)
(72) Inventor: GURI BAIGET, Sonia, 08193 BELLATERRA (ES); VEGA FERNÁNDEZ, María Lourdes, 08193 BELLATERRA (ES); CIRUCCI, John, ALLENTOWN, PA Pennsylvania PA18195-1501 (US); MONTPART PLANELL, Núria, 08193 BELLATERRA (ES); LAFUENTE SANCHO, Francisco Javier, 08193 BELLATERRA (ES); BAEZA LABAT, Juan Antonio, 08193 BELLATERRA (ES); GUISASOLA CANUDAS, Albert, 08193 BELLATERRA (ES)
(74) Representative: Oficina Ponti, SLP

(57) **Abstract**

The present invention relates to a process for the methanogenesis inhibition in single chamber microbial electrolysis cells comprising the initial addition of at least one methanogenesis inhibitor, characterized in that:
- after said initial addition of at least one methanogenesis inhibitor, dissolved hydrogen is removed from said cells.

## Description

### Field of the invention

The present invention relates to the field of bioelectrochemical systems. In particular, the present invention relates to a process for the methanogenesis inhibition in single chamber microbial electrolysis cells

### Background

Microbial Electrolysis Cells are anaerobic bioelectrochemical systems that permit the depuration of wastewater and the production of hydrogen simultaneously. The process is not thermodynamically favoured, thus a certain amount of electric potential needs to be applied. Hence the final goal is to obtain a positive energy balance, being higher the energy obtained from hydrogen than the electrical energy supplied.

The process is driven thanks to exoelectrogenic bacteria, which are able to give electrons out of the cell to a metallic anode when metabolizing their substrate under anaerobic conditions. Electrons flow along an external circuit to a cathode, where the protons generated during organic matter oxidation are reduced to hydrogen gas.

However, growing conditions for methanogenic and exoelectrogenic bacteria do not differ considerably, especially when having acetate as main carbon source, or other readily biodegradable substrates (1). Furthermore, when both communities are present, methanogenic bacteria are favoured, since they can also be hydrogenotrophic methanogens. Indeed, anaerobic sludge is usually the inoculum for bioelectrochemical systems; hence exoelectrogenic bacteria have to grow among an already enriched methanogenic population. This leads to the need of using chemical inhibitors or operational parameters that enable exoelectrogenic bacteria to grow more easily than methanogens.

2-Bromoethanesulfonic acid (BES or BESA) is a chemical inhibitor of methanogenic activity (2,3). In short, methanogenic bacteria utilize substrates such as H₂-CO₂, methanol, monomethylamine, dimethylamine, trimethylamine, and acetate which are converted to a common intermediate, CH₃-CoM. This compound is then reduced to methane and 2-mercaptoethanesulfonic acid in a reaction catalysed by the enzyme methyl-CoM methylreductase. BESA bounds to methylreductase avoiding methane formation (4).

BESA dosage to bioelectrochemical systems to inhibit methanogenic bacteria is broadly accepted at lab scale studies (5). However, its high cost and currently used concentrations convert its utilization to a non-economically feasible alternative at higher scales. At present there is not a general agreement on how much BESA is required, i.e. what is the minimum amount that allows methanogens inhibition and how long the inhibition lasts. Nollet (2) reduced methane production in rumen by more than 90% using 10 mM BESA. Chae (6) claimed that 286 mM BESA dosage retained inhibitory effects even after ten batch cycles (1 day /cycle). Parameswaran (7) stated that 50 mM BESA selectively inhibits methanogens (acetoclastic and hydrogenotrophic methanogens). A second additional drawback for BESA utilization is the possible acclimation to high BESA concentrations, as it is discussed nowadays in the literature. Methane production in bioelectrochemical systems has been observed after long term operation even when working at high BESA concentrations. The reason behind this methane production may be a real acclimation of microorganisms to BESA a protective effect of the microbial biofilm where exoelectrogenic bacteria must grow. In any case, BESA seems to be a strategy that cannot be trusted in long term operation in bioelectrochemical systems.

Alternatively, several proposals that try to come up with an operational procedure that avoids methanogens growth are discussed in the literature. Among the ones studied so far, one can find anode exposure to oxygen (air), periodic aeration, pH, stirring (8), loading rate, cycle time (9) and applied voltage (10, 11). According to literature some have shown opposite system responses, and most have just been partially investigated. Also, if working, they do not represent a complete suppression of methanogenic activity, but a mere decrease. Thus, there is a vague idea of which operational parameters can improve system performance and the need of studying them accurately arises.

It is well known that methanogens are sensitive to oxygen (air exposure) (8), changes in pH and certain chemical inhibitors (12-14). So far, according to previous studies, anode exposure to air or periodic air sparging has decreased but not suppressed methanogenic activity (8,14). However these studies were carried out for a short time, and thus are not representatives in a fed-batch or continuous system.

Conversely, studies performed at larger scales and under continuous flow conditions that avoided any methanogenic activity inhibition strategy ended up producing a biogas mostly composed of methane (15,16). This shows the necessity to determine a methane production control strategy.

The reactor design should also be engineered so that hydrogen is easily driven out of the system and it is not accessible to H₂-consuming microorganisms. Lee (17) operated a continuous upflow cathode-on-top MEC (Microbial Electrolysis Cells) that decreased hydrogen retention time and increased MEC efficiency.

In view of the above, the object of the present invention is to provide an alternative process for the complete methanogenesis inhibition in single chamber microbial electrolysis cells.

The present inventors surprisingly found that sparging with an inert gas or applying a reduced pressure after a first initial addition of a methanogenesis inhibitor leads to the complete suppression or at least to a non-detectable level of the methanogenic activity without the need of using a methanogenesis inhibitor during the whole process.

### Brief description of the drawings

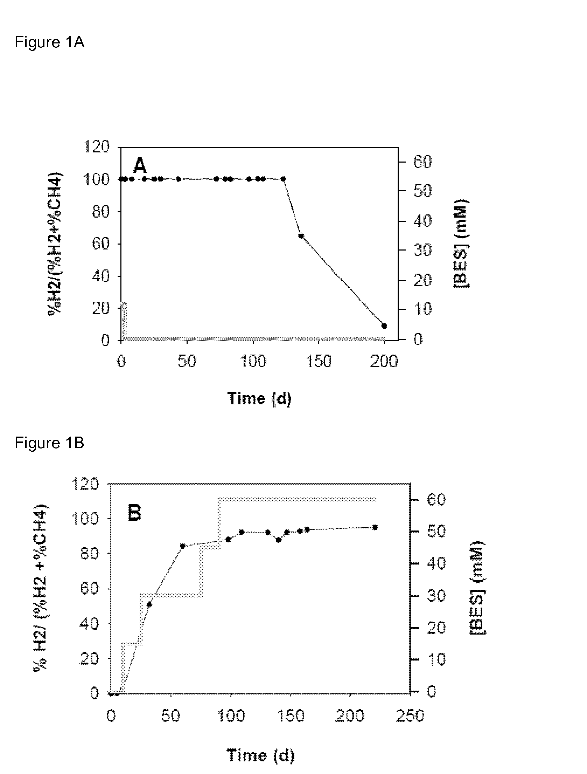

Figura 1A represents the methanogenic activity reduction following the strategy of: Initial 12mM BES dosage and nitrogen sparging at the end of the batch cycle.
Figura 1B represents the methanogenic activity reduction following the strategy of: Increased BES concentration.

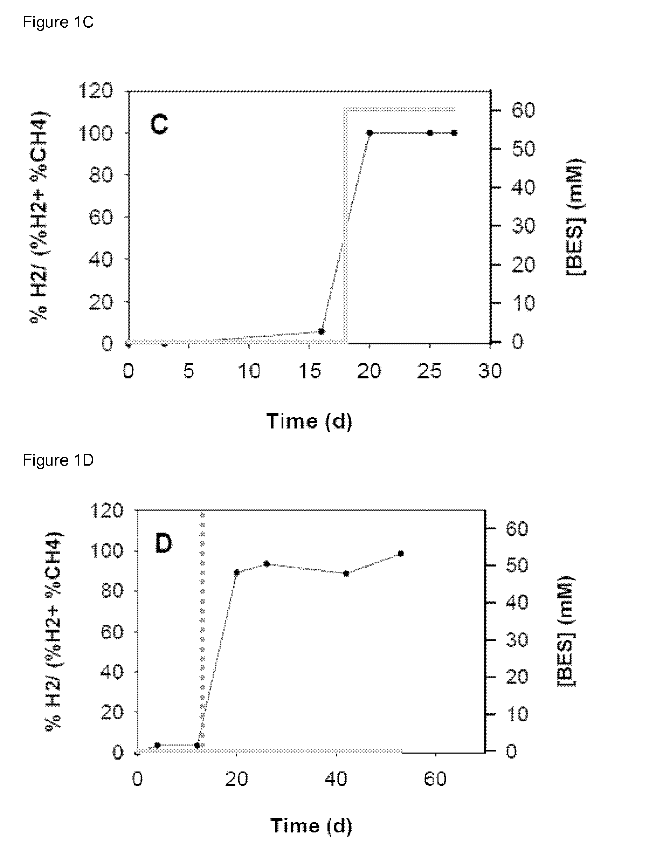

Figura 1C represents the methanogenic activity reduction following the strategy of: Sudden increase in BES concentration.
Figura 1D represents the methanogenic activity reduction following the strategy of: Continuous nitrogen sparging.

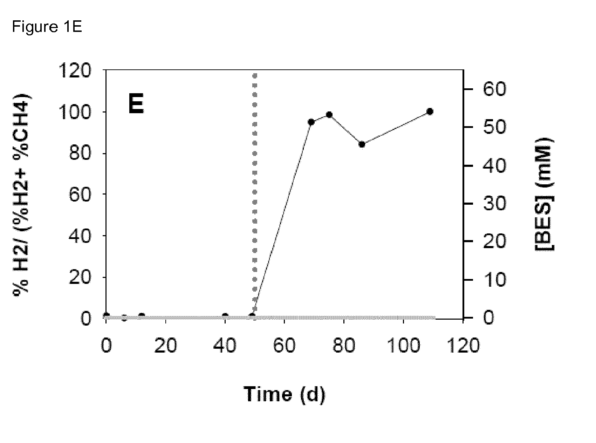

Figura 1 E represents the methanogenic activity reduction following the strategy of: Discontinuous nitrogen sparging, 24 hours stripping cycle.

Dotted lines indicate the start of the nitrogen sparging strategy.

### Detailed description of the invention

The present invention relates to a process for the methanogenesis inhibition in single chamber microbial electrolysis cells comprising the initial addition of at least one methanogenesis inhibitor, **characterized in that**:
- after said initial addition of at least one methanogenesis inhibitor, dissolved hydrogen is removed from said cells by sparging with an inert gas or by applying a reduced pressure.

In the context of the present invention, the expression "a single chamber microbial electrolysis cells" is intended to mean a device which consist of an anode, a cathode and, in some cases, a membrane separating both. The anode is enriched in exoelectrogenic bacteria. These microbes have a special ability to transfer the electrons gained in their metabolism to an external solid (e.g. a metal). The electrodes are surrounded by an electrolyte that is an aqueous solution working as a feed stock. The reductive conversions occur in the anode, where a microbial community is grown as a biofilm and organic matter is converted into CO₂, protons and electrons. The anode is free of any soluble electron acceptor (oxygen, nitrate) and bacteria have to transfer the generated electrons to an insoluble anode (generally graphite). Thus, the anodic community has to be enriched in anode respiring bacteria (ARB). The electrons flow from the anode to the cathode where they react with protons to produce hydrogen. These protons are generated in the anodic oxidation process and are transported from the anode to the cathode through the electrolyte. Fundamental thermodynamics indicate that this process is not favourable and hydrogen formation is rarely spontaneous. An additional voltage must be applied depending on the organic substrate. The key point is that the amount of energy potentially derived from hydrogen combustion is much higher than the amount of energy invested in the process.

In the context of the present invention, the expression "methanogenesis inhibition" is intended to mean the minimisation or even the total suppression of methanogenesis occurrence in these systems where a priori it should be favoured.

In the context of the present invention, a "methanogenesis inhibitor" is a compound which is able to achieve a complete suppression of methanogenic activity in the cells (single chamber microbial electrolysis cells).

The process of the present invention is usually carried out at room temperature and atmospheric pressure, but these parameters are not critical and a great variability of pressures and temperatures can be used.

In a preferred embodiment, said at least one methanogenesis inhibitor is selected from sodium bromoethenesulfonate (BES), 2-bromoethane sulfonic acid (2-BESA), lumazine, 2-chloroethanesulfonate, 2 mercaptoethanesulfonate and other coenzyme M structural analogs, propynoic acid, ethyl 2 butynoate, other HMG-CoA reductase inhibitors, methyl chloride, chloroform, methyl fluoride, fluoroacetate, ethylene, acetylene, nitrate, nitrite, nitroethane, 2-nitropropanol, phosphate, medium and long chain fatty acids, mevastatin, fluvastatin, and lovastatin, or a mixture thereof, more preferably said at least one methanogenesis inhibitor is sodium bromoethenesulfonate alone or combined with one or more of other methanogenesis inhibitors.

Preferably, the at least one methanogenesis inhibitor is added in a concentration between 5 and 100 mM, more preferably between 10 and 30 mM.

This first initial addition of methanogenesis inhibitor is usually carried out for 2-3 weeks depending of the concentration to be used and the degree of methanogenic activity.

In another preferred embodiment, the inert gas used in the process is selected from nitrogen, helium, neon, argon, or a mixture thereof, more preferably said inert gas is nitrogen alone or combined with one or more of other inert gases.

The sparging with inert gas can be carried out continuously or discontinuously, for example in cycles of 24 hours on/off.

The flow rate of inert gas to be sparged is the minimum in order to assure the stripping of all the hydrogen in the cells. Preferably, said inert gas is sparged at a gas flow rate between 0.01 and 1 vvm (gas volume flow per unit of reactor volume per minute) (i. e. between 1.7e-4 and 1.7e-2 cubic meter of gas flow per cubic meter of reactor per second).

In another preferred embodiment, a reduced pressure is applied in-situ to the liquid within the cell so that hydrogen is removed from the liquid as hydrogen gas. The applied reduced pressure is preferably 0.3-2 atmospheres below an initial pressure of the liquid within the cell. The application of reduced pressure can be carried out continuously or discontinuously, for example in cycles of 24 hours on/off.

In another preferred embodiment, firstly a portion of the liquid in the cell is transferred out of the cell. Secondly, a reduced pressure is applied ex-situ to a portion of liquid so that hydrogen is removed from the liquid as hydrogen gas. Thirdly, a portion of liquid is transferred back into cell. The applied reduced pressure is preferably 0.3-2 atmospheres below an initial pressure of the liquid within the cell. The application of reduced pressure can be carried out continuously or discontinuously, for example in cycles of 24 hours on/off.

In order to set the final of the process and consequently the absence of methanogenic activity, the detection of methane is carried out by any analytical techniques known by the skilled person. As a way of example, gas chromatography can be used for detecting methane in a sample collected from the cell after the process disclosed herein has been conducted.

It should be understood that all the embodiments disclosed herein can be combined each other.

The following Examples are offered for illustrative purposes only and are not intended to limit the scope of the present invention in any way.

### Examples

### Materials and methods

### Experimental setup

MECs were 700mL glass bottles that had been working from the very beginning with BES (12mM) in batch mode. The anode was a titanium wire connected to a graphite fibre brush (70mm diameter x 70mm length; fibre type: PANEX33 160K, ZOLTEK). It was thermally treated at 440°C for 30 minutes to enhance biomass adhesion and inoculated in a sediment-based MFC for 30 days with anaerobic sludge obtained from an anaerobic digester of an urban WWTP (Manresa, Barcelona). The brush was carefully washed to remove all bacteria that were not attached to the anode surface before the relocation to the MEC (18). The cathode was a platinum plate (4 cm², Panreac Quimica SA).

The medium contained 0.2g/L NH₄Cl, 4mg/L FeCl₂, 6mg/L Na₂S, 5mL/L of mineral media solution and 172mL/L phosphate buffer solution (PBS). Mineral media solution contained per liter: 1g EDTA, 0.164g CoCl₂·6H₂O, 0.228g CaCl₂·2H₂O, 0.02g H₃BO₃, 0.04g Na₂MoO₄·2H₂O, 0.002g Na₂SeO₃, 0.02g Na₂WO₄·2H₂O, 0.04g NiCl₂·6H₂O, 2.32g MgCl₂, 1.18g MnCl₂·4H₂O, 0.1g ZnCl₂, 0.02g CuSO₄·5H₂O and 0.02g Alk(SO₄)₂. PBS stock solution contained 70g/L Na₂HPO₄ and 12g/L KH₂PO₄. Sodium acetate was used as carbon source. Cycle duration was around 24 hours. At the end of the cycle acetate was fed again. Throughout the experiment the entire content of the MEC was replaced with fresh medium every three weeks.

The final conductivity and the pH were 12mS/cm and 7.1 respectively. Cells were magnetically stirred and kept at room temperature during all the operational period. Both electrodes were connected to a power source (HO Power, PS-23023) applying a potential of 0.8V.

### Analyses

Current production in MEC was measured quantifying the voltage drop across a 12 ohms external resistance serially connected to the circuit and voltage evolution was monitored by means of a 16-bit data acquisition card (Advantech PCI-1716) connected to a personal computer with a software developed in LabWindows CVI 2010 for data acquisition.

Acetate consumption and gas composition were analyzed with a gas chromatograph (Agilent Technologies, 7820-A) equipped with a flame ionization detector and a thermal conductivity detector. Gas composition was assessed after completely replacing the headspace content with nitrogen and following its evolution for six hours.

### Experimental procedure

Different scenarios were studied to reduce methanogenic activity:
(i) The medium, containing 12mM BES, was replaced with fresh one without BES and during the next cycles the cell was sparged with nitrogen for 20 minutes at the end of each batch cycle, in order to strip the remaining hydrogen;
(ii) in a cell where methanogenic activity was very high, BES was progressively added to the system until hydrogen production was recovered;
(iii) in a cell where methanogenic activity was very high BES concentration was abruptly increased;
(iv) in a cell where methanogenic activity was very high, hydrogen was stripped out of the system with nitrogen sparging, which was continuously on
(v) in a cell where methanogenic activity was very high, hydrogen was stripped out of the system with nitrogen sparging, which was 24 hours on and 24 hours off.

### Results and Discussion

### (i) Initial 12 mM BES dosage and nitrogen sparging at the end of the batch cycle

A MEC that had been working for several weeks with 12 mM BES, had its medium replaced with fresh one without BES and during the next batch cycles the cell was sparged with nitrogen for 20 minutes at the end of each batch cycle, in order to strip the remaining hydrogen. With the combined strategy of initial BES dosage and nitrogen sparging after each batch cycle we were able to keep under control methanogenic activity for a period of 110 days (Figure 1A). This suggests that in a batch mode MEC one can keep methanogenic activity under control by periodically sparging nitrogen, i.e. after each batch cycle, and dosing BES once in a while. In fact using this strategy we did not detect methane for a period of four months from the last BES dosage.

### (ii-iii) Methanogenic activity reduction with increased BES concentration (not part of the invention)

Taking into consideration that large scale MEC studies converge to methane production rather than hydrogen (15, 16), complete methanogenic growth was initially enhanced to study the effectiveness of BES dosage in MEC in the worst scenario possible. With this aim, BES was progressively added up to a concentration of 60 mM, which was the one required to finally recuperate the system, i.e. to almost totally eliminate methanogenic activity (Figure 1B). The same test was repeated dosing 60 mM BES at once and methane production was completely eliminated (Figure 1C).

The differences between these two tests might well be a consequence of methanogenic bacteria adaptation to BES when it is being added gradually. Adaptation of methane producers to BES was already reported by Smith (19) and Santoro (20).

An additional test was performed directly adding 60mM BES to anaerobic sludge. Methane production was reduced by almost 90%. Methanogenic activity was not completely avoided due to the high anaerobic sludge concentration.

Similarly BES addition to an MEC where methanogenic bacteria have already grown does not seem effective, since high inhibitor concentration is required to completely rid MEC of methanogens.

### (iv) Methanogenic activity reduction with continuous nitrogen sparging.

With the same intention as in the last scenario presented, nitrogen was continuously sparged into the cell so that hydrogen was removed from the MEC as it was being produced at the cathode (Figure 1D). Methane production was reduced and eventually not detected.

### (v) Methanogenic activity reduction with discontinuous nitrogen sparging.

Bearing in mind that stripping of hydrogen by nitrogen sparging implies a supplementary cost regarding pumping and separation, it was intended to reduce nitrogen supply. Nitrogen was continuously sparged for 24 hours and it was stopped for the next 24 hours. Then, the stripping cycle was again repeated. Results showed that a practically total decrease in methane production was reached (Figure 1 E).

### Reference list

[1] D. Call, B.E. Logan, Hydrogen production in a single chamber microbial electrolysis cell lacking a membrane, Environ. Sci. Technol. 42 (2008) 3401-3406.
[2] L. Nollet, D. Demeyer, W. Verstraete, Effect of 2-bromoethanesulfonic acid and Peptostreptococcus productus ATCC 35244 addition on stimulation of reductive acetogenesis in the ruminal ecosystem by selective inhibition of methanogenesis, Appl. Environ. Microbiol. 63 (1997) 194-200.
[3] R. Sparling, D. Risbey, H.M. Poggi-Varaldo, Hydrogen production from inhibited anaerobic composters, Int J Hydrogen Energy. 22 (1997) 563-566.
[4] A.A. DiMarco, T.A. Bobik, R.S. Wolfe, Unusual coenzymes of methanogenesis, Annu. Rev. Biochem. 59 (1990) 355-394.
[5] H. Liu, J. Wang, A. Wang, J. Chen, Chemical inhibitors of methanogenesis and putative applications, Appl. Microbiol. Biotechnol. 89 (2011) 1333-1340.
[6] K. Chae, M. Choi, K. Kim, F.F. Ajayi, I. Chang, I.S. Kim, Selective inhibition of methanogens for the improvement of biohydrogen production in microbial electrolysis cells, Int J Hydrogen Energy. 35 (2010) 13379-13386.
[7] P. Parameswaran, C.I. Torres, H. Lee, B.E. Rittmann, R. Krajmalnik-Brown, Hydrogen consumption in microbial electrochemical systems (MXCs): The role of homo-acetogenic bacteria, Bioresour. Technol. 102 (2011) 263-271.
[8] F.F. Ajayi, K. Kim, K. Chae, M. Choi, I.S. Kim, Effect of hydrodymamic force and prolonged oxygen exposure on the performance of anodic biofilm in microbial electrolysis cells, Int J Hydrogen Energy. 35 (2010) 3206-3213.
[9] E. Lalaurette, S. Thammannagowda, A. Mohagheghi, P. Maness, B.E. Logan, Hydrogen production from cellulose in a two-stage process combining fermentation and electrohydrogenesis, Int J Hydrogen Energy. 34 (2009) 6201-6210.
[10] C.I. Torres, R. Krajmalnik-Brown, P. Parameswaran, A.K. Marcus, G. Wanger, Y.A. Gorby, B.E. Rittmann, Selecting anode-respiring bacteria based on anode potential: Phylogenetic, electrochemical, and microscopic characterization, Environ. Sci. Technol. 43 (2009) 9519-9524.
[11] H. Hu, Y. Fan, H. Liu, Hydrogen production using single-chamber membrane-free microbial electrolysis cells, Water Res. 42 (2008) 4172-4178.
[12] A. Wang, W. Liu, S. Cheng, D. Xing, J. Zhou, B.E. Logan, Source of methane and methods to control its formation in single chamber microbial electrolysis cells, Int J Hydrogen Energy. 34 (2009) 3653-3658.
[13] L. Zhuang, S. Zhou, Y. Li, Y. Yuan, Enhanced performance of air-cathode two-chamber microbial fuel cells with high-pH anode and low-pH cathode, Bioresour. Technol. 101 (2010) 3514-3519.
[14] K. Chae, M. Choi, K. Kim, F.F. Ajayi, W. Park, C. Kim, I.S. Kim, Methanogenesis control by employing various environmental stress conditions in two-chambered microbial fuel cells, Bioresour. Technol. 101 (2010) 5350-5357.
[15] G.K. Rader, B.E. Logan, Multi-electrode continuous flow microbial electrolysis cell for biogas production from acetate, Int J Hydrogen Energy. 35 (2010) 8848-8854.
[16] R. Cusick, B. Bryan, D. Parker, M. Merrill, M. Mehanna, P. Kiely, G. Liu, B. Logan, Performance of a pilot-scale continuous flow microbial electrolysis cell fed winery wastewater, Applied Microbiology and Biotechnology. 89 (2011) 2053-2063.
[17] H.-. Lee, C.I. Torres, P. Parameswaran, B.E. Rittmann, Fate of H2 in an upflow single-chamber microbial electrolysis cell using a metal-catalyst-free cathode, Environmental Science and Technology. 43 (2009) 7971-7976.
[18] Ribot E., Montpart N., Ruiz Y., Rago L., Lafuente, J., Baeza J.A., Guisasola A., Development of an efficient procedure to select exoelectrogenic bacteria from anaerobic WWTP sludge, (in preparation).
[19] M.R. Smith, Reversal of 2-bromoethanesulfonate inhibition of methanogenesis in Methanosarcina sp. J. Bacteriol. 156 (1983) 516-523.
[20] N. Santoro, J. Konisky, Characterization of bromoethanesulfonate-resistant mutants of Methanococcus voltae: Evidence of a coenzyme M transport system, J. Bacteriol. 169 (1987) 660-665.

## Claims

1. Process for the methanogenesis inhibition in single chamber microbial electrolysis cells comprising the initial addition of at least one methanogenesis inhibitor,
**characterized in that**:
- after said initial addition of at least one methanogenesis inhibitor, dissolved hydrogen is removed from said cells.

2. Process according to claim 1, wherein hydrogen is removed from said cells by sparging with an inert gas.

3. Process according to claim 1, wherein hydrogen is removed from said cells by applying a reduced pressure.

4. Process according to claim 1, wherein said at least one methanogenesis inhibitor is selected from sodium bromoethenesulfonate (BES), 2-bromoethane sulfonic acid (2-BESA), lumazine, 2-chloroethanesulfonate, 2 mercaptoethanesulfonate and other coenzyme M structural analogs, propynoic acid, ethyl 2 butynoate, other HMG-CoA reductase inhibitors, methyl chloride, chloroform, methyl fluoride, fluoroacetate, ethylene, acetylene, nitrate, nitrite, nitroethane, 2-nitropropanol, phosphate, medium and long chain fatty acids, mevastatin, fluvastatin, and lovastatin, or a mixture thereof.

5. Process according to claim 4, wherein said at least one methanogenesis inhibitor is sodium bromoethenesulfonate alone or combined with one or more of other methanogenesis inhibitors.

6. Process according to claim 4, wherein said at least one methanogenesis inhibitor is added in a concentration between 5 and 100 mM.

7. Process according to claim 6, wherein said at least one methanogenesis inhibitor is added in a concentration between 10 and 30 mM.

8. Process according to claim 2, wherein said inert gas is selected from nitrogen, helium, neon, argon, or a mixture thereof.

9. Process according to claim 8, wherein said inert gas is nitrogen alone or combined with one or more of other inert gases.

10. Process according to claim 2, wherein said inert gas is sparged continuously or discontinuously.

11. Process according to claim 2, wherein said inert gas is sparged at a gas flow rate between 0.01 and 1 vvm.

12. Process according to claim 3, wherein a reduced pressure is applied in-situ to the liquid within the cell so that hydrogen is removed from the liquid as hydrogen gas.

13. Process according to claim 12 in which the applied reduced pressure is 0.3-2 atmospheres below an initial pressure of the liquid within the cell.

14. Process according to claim 3, wherein first a portion of the liquid in the cell is transferred out of the cell; secondly, a reduced pressure is applied ex-situ to a portion of liquid so that hydrogen is removed from the liquid as hydrogen gas; thirdly, a portion of liquid is transferred back into cell.

15. Process according to claim 14, wherein the applied reduced pressure is 0.3-2 atmospheres below an initial pressure of the liquid within the cell.
